# EUROPÄISCHE PATENTANMELDUNG

(11) **EP 2 458 226 A1**
(43) Veröffentlichungstag der Anmeldung: **30.05.2012**
(21) Anmeldenummer: 10192924.8
(22) Anmeldetag: 29.11.2010
(51) Int. Cl.: F15B 15/26, F16H 63/48

(54) **Verriegelungs-Vorrichtung**

(71) Anmelder: Magnetbau Schramme GmbH & Co. KG, 88693 Deggenhausertal (DE)
(72) Erfinder: Die Erfindernennung liegt noch nicht vor
(74) Vertreter: Engelhardt & Engelhardt

(57) **Zusammenfassung**

Bei einer Verriegelungs-Vorrichtung (1) zur Fixierung und Freigabe eines Bauteiles (2), insbesondere eines Zahnrades (2) in einem Automatik-Getriebe (3),
- mit einem Sperrkolben (11) der ummittelbar oder über Zwischenglieder (30) mit dem Bauteil (2) in trieblicher Wirkverbindung steht bzw. von diesem entkoppelt ist,
- mit einem Gehäuse (6), in dem der Sperrkolben (11) axial verschiebbar gelagert ist und in dem ein Druckraum (7) mit einer Einlassöffnung (8) für ein Medium, vorzugsweise Hydraulikflüssigkeit, vorgesehen ist, in dem der Sperrkolben (11) eingesetzt und durch das Medium mit einer Kraft beaufschlagt ist,
- mit einer in dem Gehäuse (6) axial verschiebbaren Hubstange (21), die fluchtend und beabstandet zu dem Sperrkolben (11) angeordnet ist und die elektromagnetisch gehalten und/oder mittels eines Elektromagneten (22) hin und her bewegbar ist,
- und mit mindestens einer Sperreinrichtung (31), die durch die Bewegung der Hubstange (21) aktivierbar ist und auf den Sperrkolben (11) zu dessen Arretierung einwirkt,

soll zwischen dem Sperrkolben (11) und dem Gehäuse (6) eine formschlüssige Wirkverbindung vorhanden sein, die wenig Verschleiß unterliegt und die auch nach einer bestimmten Anzahl von Lastwechseln zuverlässig den Sperrkolben (11) in seiner geöffneten Position fixiert.
Dies wird dadurch erreicht,
- dass die Sperreinrichtung (31) als Kugel- oder Wälzkörper (32) ausgebindet ist, die jeweils auf der Außenseite der Hubstange (21) anliegt,
- dass in den Sperrkolben (11) eine Aufnahmetasche (14) eingearbeitet ist, in die die Hubstange (21) teilweise und die jeweilige Kugel (32) vollständig angeordnet sind,
- dass die jeweilige Kugel (32) der Sperreinrichtung (31) zwischen der Innenwand (15) der Aufnahmetasche (14) und der Hubstange (21) relativ zu dieser bewegbar ist,
- dass die jeweilige Kugel (32) mittels einer an der Hubstange (21) angeformten sich in Richtung des Sperrkolbens (11) verbreiternde Kegelfläche (26) in Richtung der Innenwand (15) der Aufnahmetasche (14) anhebbar ist,
- und dass an der Innenwand (15) der Aufnahmetasche (14) eine sich in Richtung der Hubstange (32) verjüngende Anlagefläche (18) angearbeitet ist, an die die jeweilige Kugel (32) der Sperreinrichtung (31) zur formschlüssigen Fixierung des Sperrkolbens (11) anliegt.

## Beschreibung

Die Erfindung bezieht sich auf eine Verriegelungs-Vorrichtung zur Fixierung und Freigabe eines Bauteils, insbesondere eines Zahnrades in einem Automatik-Getriebe nach dem Oberbegriff des Patentanspruches 1.

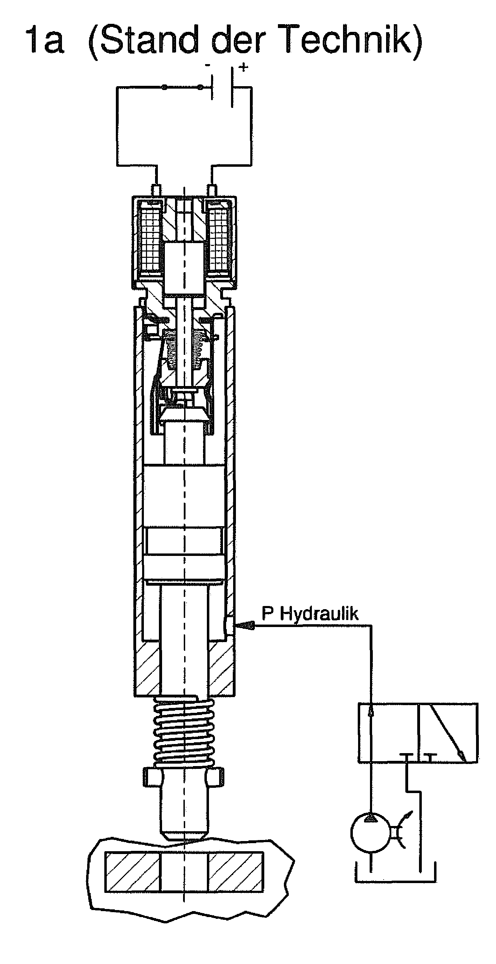

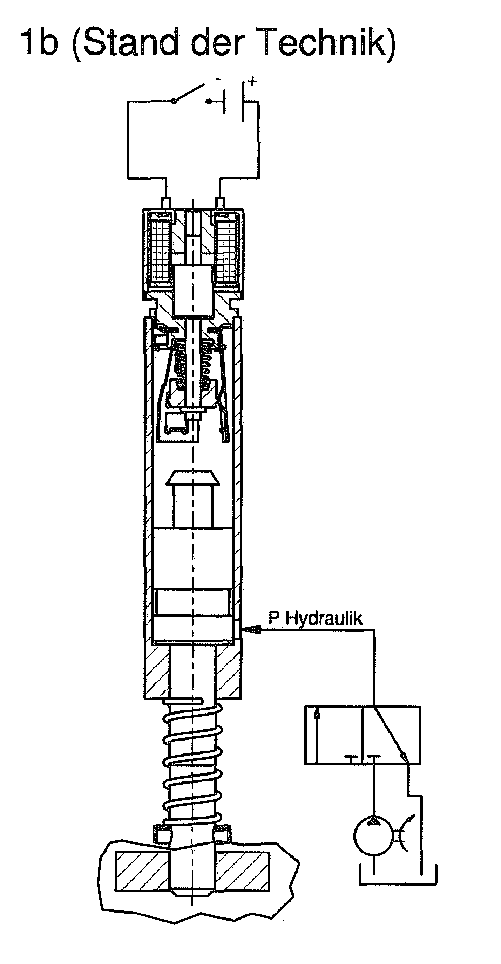

Solche Verriegelungs- oder Sperr-Vorrichtungen sind der Patentanmelderin seit mehreren Jahren bekannt, da diese die für den Betrieb solcher Sperrvorrichtungen erforderlichen Elektromagnete fertigt und in Verkehr bringt. In den Figuren 1 a und 1 b sind die bekannten Verriegelungs-Vorrichtungen abgebildet.

Diese Verriegelungs-Vorrichtungen bestehen aus einem in einem Gehäuse axial verschiebbar gelagerten Sperrkolben, dessen aus dem Gehäuse ragendes freies Ende in Richtung eines Bauteils, vorzugsweise eines Zahnrades eines Automatik-Getriebes, verfahrbar ist. Das Zahnrad weist eine Aufnahmeöffnung auf, in die das freie Ende des Sperrkolbens oder ein mit diesem verbundenes Zwischenglied eingreift, um das Zahnrad festzulegen. Dies entspricht der "Parkposition"-Schaltstellung.

Sobald das Automatik-Getriebe freizugeben ist, soll der Sperrkolben aus der Eingriffsposition mit dem Bauteil in eine geöffnete Stellung gemäß Figur 1a überführt werden. Beim Anlassen des Pkw-Motors entsteht im Automatik-Getriebe ein Hydraulikdruck, der durch ein schematisch dargestelltes Ventil mit einem in dem Gehäuse vorgesehenen Druckraum über eine Einlassöffnung verbunden ist, durch die das Medium, insbesondere Hydraulikflüssigkeit, durch den Überdruck in dem Getriebe einströmt und unmittelbar auf den Sperrkolben einwirkt, so dass dieser aus der Aufnahmeöffnung des Bauteils hinausgezogen ist. Folglich ist dann das Bauteil freigegeben und kann rotieren.

Um sicherzustellen, dass der Sperrkolben auch bei abfallendem Hydraulikdruck nicht in das Bauteil zurückfährt oder um diesen während der Leerlaufstellung in der geöffneten Position zu halten, sind drei Blattfedern vorgesehen, die das dem Bauteil gegenüberliegende freie Ende des Sperrkolbens in dessen geöffnetem Zustand arretieren. Die drei Blattfedern wirken mit einer Hubstange zusammen, die in dem Gehäuse axial bewegbar ist. Die Hubstange taucht teilweise in einen Elektromagneten ein. Der Elektromagnet ist über einen Schalter mit einer Stromquelle verbunden und kann somit bestromt werden, so dass dieser ein Magnetfeld ausbildet, das auf die metallische Hubstange einwirkt, so dass diese an dem Elektromagneten anliegt und durch diesen gehalten ist. Sobald die Hubstange aus dem Bereich der drei Blattfedern herausgezogen ist, schnappen diese aufeinander zu. Die Bewegung der Hubstange und des Sperrkolbens sind derart synchronisiert, dass das freie Ende des Sperrkolbens exakt in dem Moment im Bereich der drei Blattfedern positioniert ist, wenn diese zusammenschnappen.

An dem freien Ende des Sperrkolbens ist eine ringförmige Anlagefläche angearbeitet, in die die freien Enden der Blattfedern in Form einer Hinterschneidung eingreifen und folglich mit dem Sperrkolben eine formschlüssige Wirkverbindung bilden..

Die Außenwand der Hubstange streicht beim Bewegen über Nasen, die an der jeweiligen Blattfeder angeformt sind, wodurch die Blattfedern nach außen gedrückt sind. Sobald die Hubstange die Nasen der Blattfedern freigibt, schnappen die Blattfedern aufeinander zu.

Sollte der Hydraulikdruck in dem Druckraum, während der Sperrkolben in seiner geöffneten Position gehalten ist, nachlassen, so halten die drei Blattfedern den Sperrkolben, so dass dieser nicht in die Aufnahmeöffnung des Zahnrades einfahren kann.

Als nachteilig bei diesem bekannt gewordenen Stand der Technik hat sich herausgestellt, dass die Blattfedern während ihrer Betriebsdauer einem erheblichen Lastwechsel ausgesetzt sind, der nach Erreichen einer bestimmten Betriebszeit dazu führt, dass die Blattfedern brechen können. Sobald eine oder mehrere der Blattfedern nicht mehr die Kraft aufbringen, den Sperrkolben in seiner geöffneten Position zu arretieren, besteht die Gefahr, dass der Sperrkolben in das Bauteil, während dieses rotiert, einfährt und somit das Automatik-Getriebe stillsetzt. Dies führt bekanntermaßen zu erheblichen Beschädigungen in dem Automatik-Getriebe und kann unter Umständen eine lebensbedrohende Situation verursachen, wenn nämlich das Fahrzeug unerwartet durch Blockieren des Getriebes abgebremst wird.

Bei der Verriegelungs-Vorrichtung handelt es sich demnach um ein Sicherheitsbauteil, das besonderen mechanischen und funktionalen Anforderungsprofilen zu genügen hat.

Bei der Verriegelungs-Vorrichtung nach dem Stand der Technik hat sich zudem als nachteilig herausgestellt, dass die Montage, insbesondere der Blattfedern, äußerst zeitaufwändig ist, da es sich hierbei um Einzelbauteile handelt, die exakt an der Hubstange zu fixieren sind und die mit ihren Rastnasen in die Hinterschneidung des Sperrkolbens eingreifen müssen, um dessen Arretierung zu erreichen. Darüber hinaus ist es nach der Montage der bekannten Verriegelungs-Vorrichtung notwendig, dass die Funktionsweise der Blattfedern, also der Arretierungszustand des Sperrkolbens, überprüft werden muss, um sicherzustellen, dass die Verriegelungs-Vorrichtung die Sperrfunktion ausübt.

Es ist daher Aufgabe der Erfindung eine Verriegelungs-Vorrichtung der eingangs genannten Gattung derart weiterzubilden, dass zwischen dem Sperrkolben und dem Gehäuse eine formschlüssige Wirkverbindung vorhanden ist, die wenig Verschleiß unterliegt und die auch nach einer bestimmten Anzahl von Lastwechseln zuverlässig den Sperrkolben in seiner geöffneten Position fixiert, ohne dass die Gefahr besteht, dass aufgrund von Verschleiß einzelner Arretierungsbauteile der Sperrkolben während des Betriebszustandes des Automatik-Getriebes in eines der Zahnräder des Automatik-Getriebes einfährt und somit das Automatik-Getriebe blockiert.

Diese Aufgabe wird erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass die Sperreinrichtung der Verriegelungs-Vorrichtung als Kugel- oder Wälzkörper ausgebildet ist, die im Arretierungszustand des Sperrkolbens formschlüssig an diesem und an der Hubstange gehalten sind, entsteht eine zuverlässige Wirkverbindung, die bei Lastwechseln kaum einem Verschleiß unterliegt, da die Kugeln lediglich auf den Oberflächen abrollen. Darüber hinaus ist der Sperrkolben bei Abfall des Hydraulikdruckes durch die Sperreinrichtung fixiert, so dass dieser erst dann in seine Arretierungsposition zur Fixierung des Bauteils bewegbar ist, wenn die Hubstange die Kugeln freigibt, so dass der Sperrkolben aus dem Arretierungszustand durch die Sperreinrichtung gelöst ist.

Die erfindungsgemäße Verriegelungs-Vorrichtung weist vorteilhafterweise einen einfachen konstruktiven Aufbau auf, der mit geringen Produktionskosten fertigbar ist. Die Steuerung der Hubstange und damit die Festsetzung bzw. Freigabe des Sperrkolbens erfolgt mit einfachen elektronischen bzw. mechanischen Bauteilen, deren Steuerung einfach zu bewerkstelligen ist.

In der Zeichnung sind zwei erfindungsgemäße Ausgestaltungen einer Verriegelungs-Vorrichtung gezeigt, die nachfolgend näher erläutert sind. Im Einzelnen zeigt jeweils im Schnitt:
- Figur 2a: ein erstes Ausführungsbeispiel einer Verriegelungs-Vorrichtung, mit einem Sperrkolben, der in ein Bauteil zu dessen Verriegelung einsetzbar und der in einem Gehäuse der Vorrichtung axial bewegbar gehalten ist, und mit einer Hubstange, die mittels eines Elektromagneten an diesem gehalten ist, um eine Sperreinrichtung zu betätigen, durch die der Sperrkolben in seiner geöffneten Position arretiert ist, in dessen Arretierungszustand,
- Figur 2b: die Vorrichtung gemäß Figur 2a in einer Zwischenstellung,
- Figur 2c: die Vorrichtung gemäß Figur 2a im geöffneten Zustand des Sperrkolbens, der mit der Sperreinrichtung in formschlüssiger Wirkverbindung steht,
- Figur 2d: eine vergrößerte Darstellung der Vorrichtung gemäß Figur 2a,
- Figur 3a: ein zweites Ausführungsbeispiel einer Verriegelungs-Vorrichtung, mit einem Sperrkolben, der in ein Bauteil zu dessen Verriegelung einsetzbar und der in einem Gehäuse der Vorrichtung axial bewegbar gehalten ist, und mit einer Hubstange, die mittels eines Elektromagneten in dem Gehäuse axial bewegbar ist, um eine Sperreinrichtung zu betätigen, durch die der Sperrkolben in seiner geöffneten Position arretiert ist, in dessen Arretierungszustand,
- Figur 3b: die Vorrichtung gemäß Figur 3c in einer Zwischenstellung,
- Figur 3c: die Vorrichtung gemäß Figur 3a im geöffneten Zustand des Sperrkolbens, der mit dem Bauteil in formschlüssiger Wirkverbindung steht,
- Figur 3d: eine vergrößerte Darstellung der Vorrichtung gemäß Figur 3a.

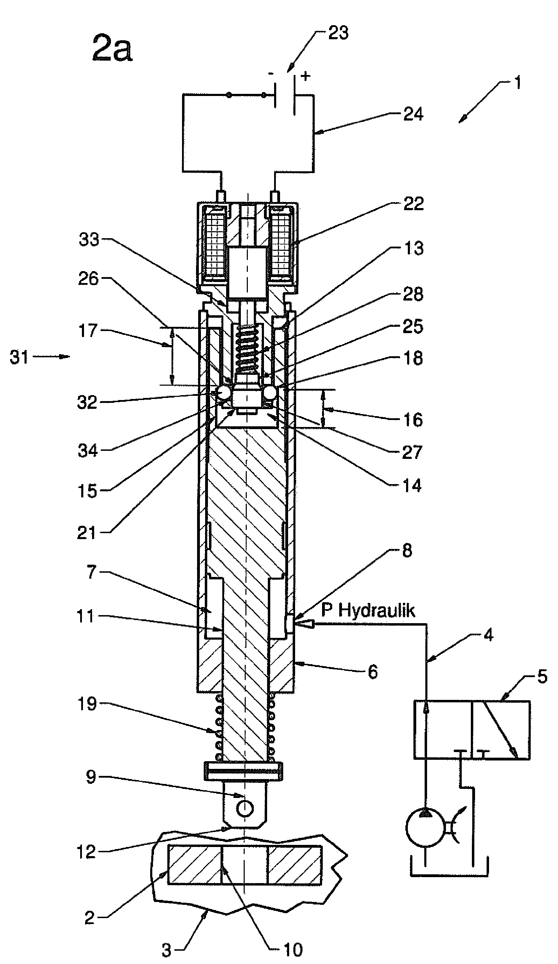

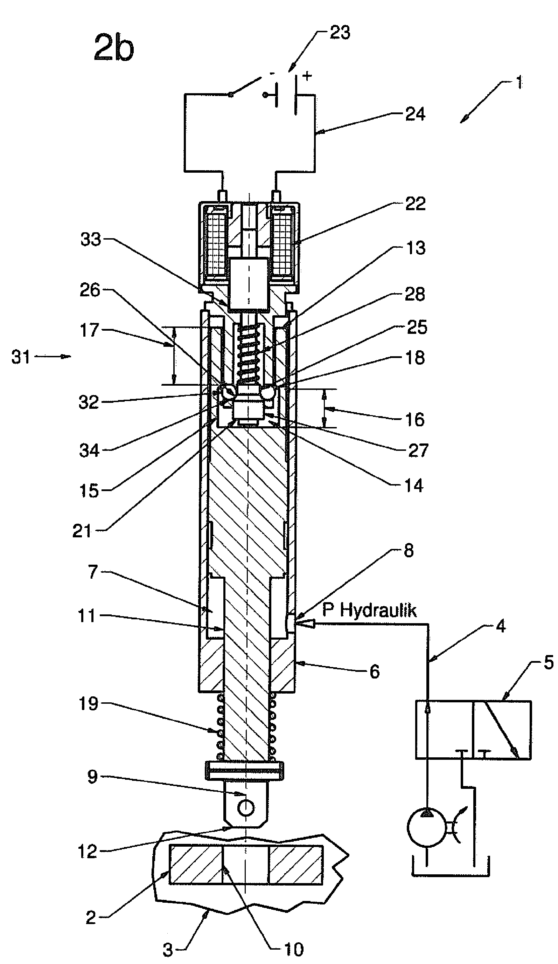

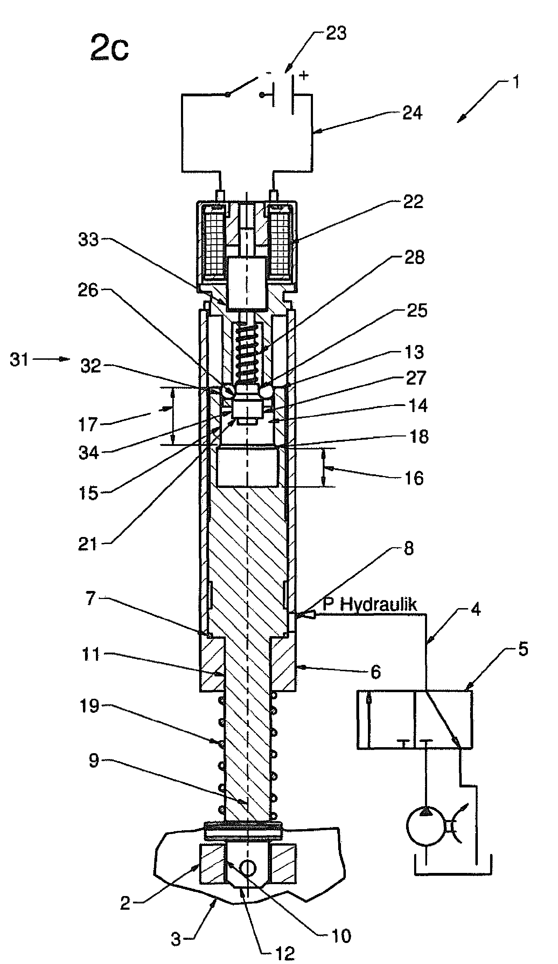

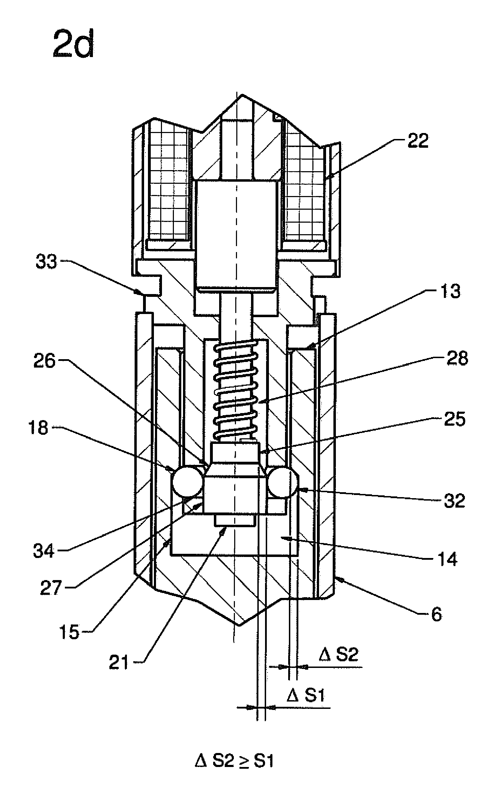

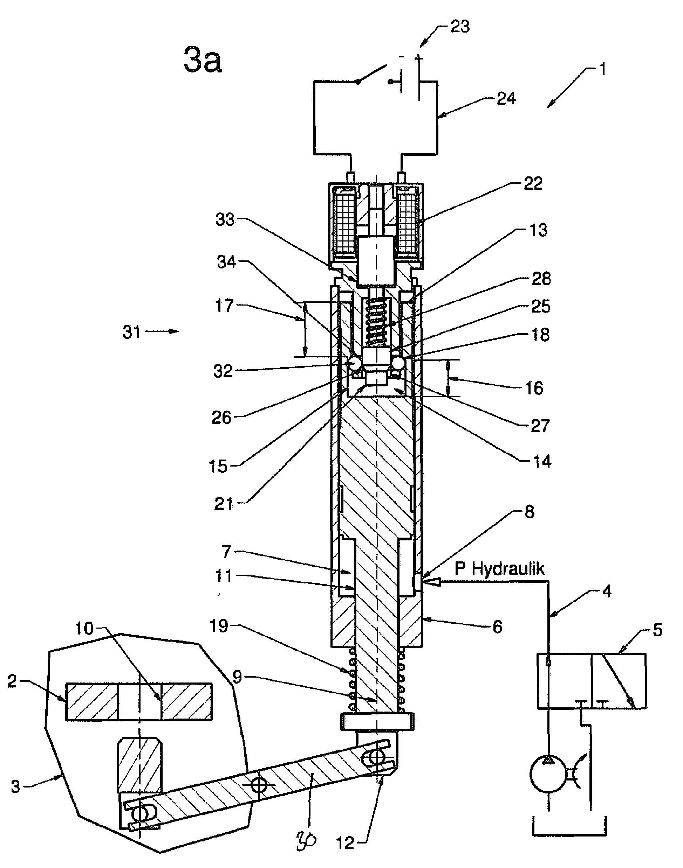

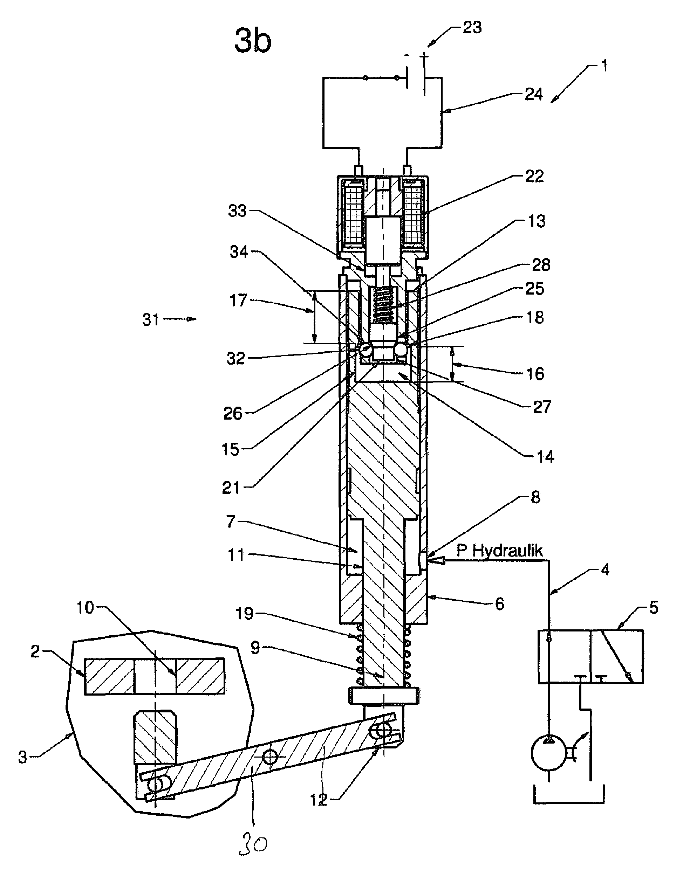

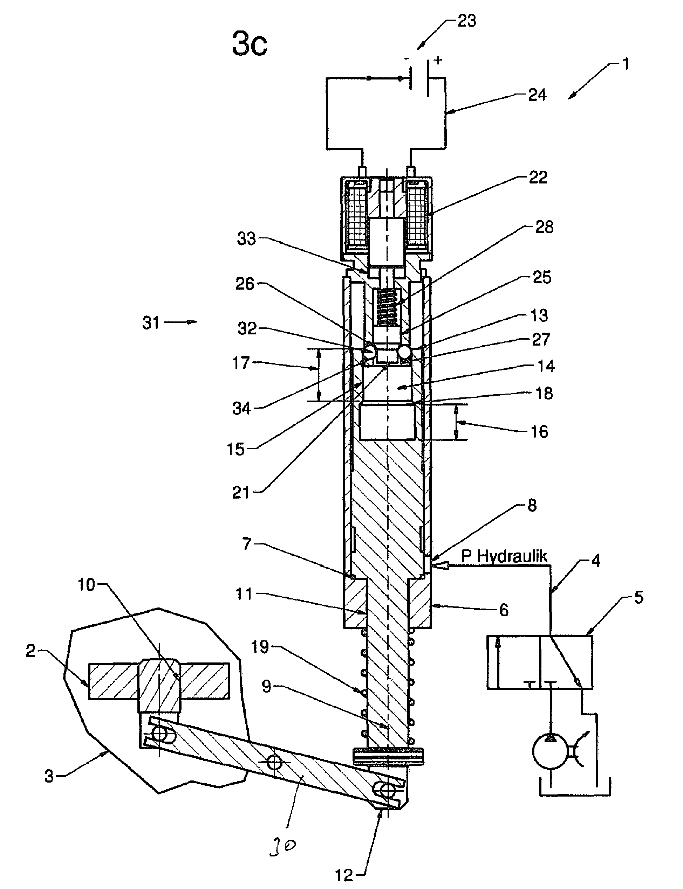

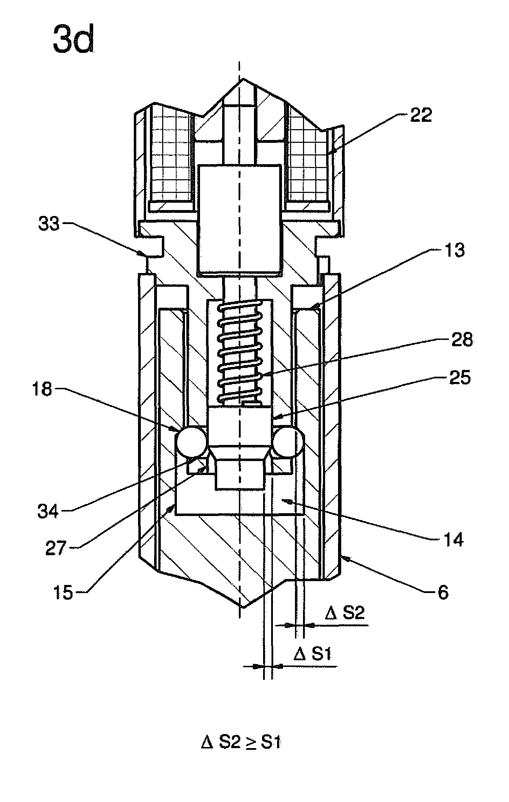

In den Figuren 2a, 2b, 2c und 2d sowie in den Figuren 3a, 3b, 3c und 3d ist eine Verriegelungs-Vorrichtung 1 mit einem identischen konstruktiven Aufbau abgebildet, deren Funktionsweise jedoch unterschiedlich ausgestaltet ist. Die Verriegelungs-Vorrichtung 1 dient zur Fixierung und Freigabe eines schematisch darstellten Bauteiles 2, das beispielsweise als Zahnrad in einem Automatik-Getriebe 3 angeordnet ist. In dem Automatik-Getriebe 3 herrscht, während der Antriebsmotor eingeschaltet ist, ein bestimmter Hydraulikdruck, der über eine Hydraulikleitung 4 und einem SteuerVentil 5 in einen in einem Gehäuse 6 vorgesehenen Druckraum 7 einmündet. Der Druckraum 7 weist demnach eine Einlassöffnung 8 auf, in die die Hydraulikleitung 4 eingesetzt ist.

Das Zahnrad 2 soll mittels eines in dem Gehäuse 6 axial beweglichen Sperrkolben 11 gemäß den Figuren 2c und 3c verriegelt sein. Um eine formschlüssige Wirkverbindung zwischen dem Sperrkolben 11 und dem Zahnrad 2 zu erreichen, ist in dieses eine Aufnahmeöffnung 10 eingearbeitet, in die das dem Zahnrad 2 zugewandte erste freie Ende 12 des Sperrkolbens 11 eingreift, so dass die Rotationsbewegungen des Zahnrades 2 durch den Sperrkolben 11 verhindert sind. Die in den Figuren 2c und 3c gezeigte Betriebsstellung des Sperrkolbens 11 ist als Verriegelungs-Position bezeichnet.

Sobald der nicht dargestellte Antriebsmotor gestartet ist, entsteht in dem Automatik-Getriebe 3 ein Überdruck und das in diesem eingefüllte Medium, insbesondere Hydraulikflüssigkeit, wird durch die Hydraulikleitung 4 in den Druckraum 7 eingeleitet. Da der Sperrkolben 11 in den Druckraum 7 eingesetzt ist, wirkt der Überdruck unmittelbar auf den Sperrkolben 11, so dass dieser von dem Zahnrad 2 wegbewegt wird und dieses somit freigibt. Zwischen dem Gehäuse 6 und dem ersten freien Ende des Sperrkolbens 11 ist eine Schraubendruckfeder 19 angeordnet, die durch die Bewegung des Sperrkolbens 11 zusammengedrückt, also unter Vorspannung gehalten ist. In den in Figur 2a und 3a gezeigten Betriebsstellungen des Sperrkolbens 11 ist als Entriegelungszustand des Sperrkolbens 11 hinsichtlich des Zahnrades 2 und als Arretierungsposition des Sperrkolbens 11, die nachfolgend näher erläutert ist, bezeichnet.

Das zweite freie Ende 13 des Sperrkolbens 11, das dem Zahnrad 2 abgewandt ist, ist nämlich mittels einer Sperreinrichtung 31 formschlüssig fixiert. Um dies zu erreichen, ist in das zweite freie Ende 13 des Sperrkolbens 11 eine Aufnahmetasche 14 eingearbeitet, deren Seitenwand mit der Bezugsziffer 15 versehen ist. Die Aufnahmetasche 14 ist in zwei Bereiche 16 und 17 unterteilt, die zwei unterschiedlich groß bemessene Durchmesser aufweisen. Der erste Bereich 16 ist dabei dem Sperrkolben 11 zugewandt und der zweite Bereich 17, der einen kleineren Durchmesser als der erste Bereich 16 aufweist, ist benachbart zu einem in dem Gehäuse 6 angebrachten Elektromagneten 22 angeordnet. Die zwischen dem ersten und dem zweiten Bereich 16 und 17 verlaufende Schulter dient als Anlagefläche und ist mit der Bezugsziffer 18 versehen. Die Anlagefläche 18 weist eine im Querschnitt kegelstumpfartige Kontur auf, die sich in Richtung der Längsachse 9 des Gehäuses 6 bezogen auf die Bewegungsrichtung des Sperrkolbens 11 verjüngt, also von außen nach innen zwischen dem ersten Teilbereich 16 und dem zweiten Teilbereich 17 der Aufnahmetasche 14 verläuft.

Um die Sperreinrichtung 31 betätigen zu können, ist eine Hubstange 21 vorgesehen, die mit einem freien Ende dem Elektromagneten 22 zugewandt ist und ganz oder teilweise aus einem magnetisch leitfähigen Werkstoff besteht. Der Elektromagnet 22 ist über eine elektrische Leitung 24 mit einer Stromquelle 23 verbunden, die über einen Schalter 29 von dem Elektromagneten 22 getrennt werden kann. Folglich wird der Elektromagnet 22 wahlweise von der Stromquelle 23 mit Energie versorgt, so dass dieser ein Magnetfeld ausbildet, in dessen Wirkungsbereich die Hubstange 21 verläuft.

Sobald daher der Elektromagnet 22 bestromt ist, entsteht das Magnetfeld, wodurch die Hubstange 21 an dem Elektromagneten 22 gehalten ist und an diesem anliegt.

Das Anlassen des Antriebsmotors bewirkt zunächst, dass der Hydraulikdruck in dem Automatik-Getriebe 3 entsteht und gleichzeitig wird der Sperrkolben 11 gemäß Figur 2b zurückgedrückt. Die Hubstange 21 wird dann durch den Sperrkolben 11 in Richtung des Elektromagneten 22 gedrückt und sobald die Hubstange 21 an dem Elektromagneten 22 anliegt, wird dieser bestromt. Die Bewegungen des Sperrkolbens 11 und der Hubstange 21 erfolgen demnach synchron zueinander und zu jeweils einem vorgegebenen Aktivierungszeitpunkt.

Das andere dem Sperrkolben 11 zugewandte freie Ende der Hubstange 21 weist drei Abschnitte 25, 26 und 27 auf, deren Außendurchmesser unterschiedlich groß bemessen sind. Der erste Abschnitt 25 weist den kleinsten Durchmesser auf und ist dem Elektromagneten 22 zugewandt. Der dritte Abschnitt 27 ist dabei derjenige, welcher den größten Außendurchmesser aufweist. Der zweite Abschnitt 26 verläuft zwischen dem ersten und dritten Abschnitt 25 und 27 und ist im Querschnitt kegelstumpfartig ausgestaltet.

Die Steigungen der Anlagefläche 18 und des zweiten Abschnittes 26 der Hubstange 21 sind identisch und betragen etwa zwischen 20 und 50°, vorzugsweise 45°. Im Arretierungszustand des Sperrkolbens 11 verlaufen demnach die Anlagefläche 18 und der zweite Abschnitt 26 parallel zueinander. Es ist ohne weiteres möglich, die Steigungen der Anlagefläche 18 und des zweiten Abschnittes 26 völlig unterschiedlich zueinander auszurichten. Insbesondere kann die Steigung der Anlagefläche 18 auch in einem Winkel von 90° zu der Längsachse des Sperrkolbens 11 verlaufen.

Die Sperreinrichtung 31 besteht aus mindestens zwei Kugeln 32 und einer Hülse 33. Die Hülse 33 verläuft zwischen der Innenwand 15 der Aufnahmekammer 14 und der Hubstange 21. Im Bereich des freien Endes der Hubstange 21, die dem Sperrkolben 11 zugewandt ist, ist in die Hülse 33 für jede Kugel 32 eine Durchgangsbohrung 34 eingearbeitet, in die eine der Kugeln 32 verdrehbar eingesetzt ist. Jede der Kugeln 32 wird folglich in einer der Durchgangsbohrungen 34 gehalten. Der Durchmesser der Kugeln 32 ist wesentlich größer bemessen als die Wandstärke der Hülse 33 im Bereich der Durchgangsbohrungen 34, so dass die Kugeln 32 auf beiden Seiten der Hülse 32 aus dieser herausstehen.

Zum einen liegen die Kugeln 32 auf dem ersten, zweiten oder dritten Abschnitt 25, 26 oder 27 der Hubstange 21 auf und zum anderen liegen diese an dem ersten und zweiten Bereich 16 und 17 sowie der Anlagefläche 18 des Sperrkolbens 11 an und rollen auf diesen Flächen ab.

Wenn nunmehr der Sperrkolben 11 und die Hubstange 21 in Richtung des Elektromagneten 22 bewegt sind, rollen die Kugeln 32 zunächst auf den zweiten Bereich 17 der Aufnahmetasche 14 und dem ersten Abschnitt 25 der Hubstange 21 ab.

Der Verstellweg des Sperrkolbens 11 ist wesentlich größer bemessen als der Verstellweg der Hubstange 21. Die Bewegungen der Hubstange 21 sind dabei an die Bewegungen des Sperrkolbens 11 angepasst, und zwar derart, dass zunächst der Sperrkolben 11 mittels des Hydraulikdruckes in dem Druckraum 7 in Richtung der Hubstange 21 bewegt ist, so dass die Kugeln 32, die durch die Hülse 33 gehalten sind, auf der Oberfläche der Hubstange 21 abrollen. Wenn der Sperrkolben 11 die Hubstange 21 in Richtung des Elektromagneten 22 bewegt hat und die Hubstange 21 an dem Elektromagneten 22 anliegt, wird dieser bestromt, so dass die Hubstange 21 in dem Magnetfeld des Elektromagneten 22 zuverlässig gehalten ist, so dass dann eine Relativbewegung zwischen der Hubstange 21 und den Kugeln 32 entsteht, so dass diese über den ersten Abschnitt auf den zweiten Abschnitt und anschließend auf den dritten Abschnitt 25, 26 und 27 abrollen.

Da der dritte Abschnitt 27 einen größeren Außendurchmesser aufweist als die ersten und zweiten Abschnitte 25, 26, werden die Kugeln 32 nach außen, also in Richtung der Innenwand 15 der Aufnahmetasche 14 gedrückt und liegen an der Anlagefläche 18 an, wodurch eine formschlüssige Wirkverbindung zwischen dem Sperrkolben 11 und der Hubstange 21 entsteht.

Sobald der Sperrkolben 11 in die Verriegelungs-Position für das Zahnrad 2 überführt werden soll, wird der Elektromagnet 22 von der Stromquelle 23 durch Öffnen des Schalters 29 getrennt und die Druckfeder 28 verschiebt die Hubstange 21 in Richtung des Sperrkolbens, so dass die Kugeln 32 auf dem ersten Abschnitt 25 der Hubstange 21 aufliegen und somit die Axialbewegung des Sperrkolbens 11 in Richtung des Zahnrades 2 freigegeben ist. Mittels der Druckfeder 19 wird der Sperrkolben 11 aus dem Gehäuse 6 in das Zahnrad 2 eingeschoben.

Das Zahnrad 2 ist lediglich ein bestimmter Anwendungsfall. Es ist ohne weiteres möglich, die Verriegelungs-Vorrichtung 1 auch für Bauteile 2 zu verwenden, deren Linearbewegung zu sperren ist.

In den Figuren 3a, 3b, 3c und 3d ist der Elektromagnet 22 derart bestromt, dass durch das Magnetfeld des Elektromagneten 22 die Hubstange 21 entgegengesetzt zu der Bewegung des Sperrkolbens 11 verfahren ist. Die Hubstange 21 ist derart konstruktiv unterschiedlich ausgestaltet, dass der erste, zweite und dritte Abschnitt 25, 26 und 27 in Richtung des Sperrkolbens 11 verlaufen. Die in Figur 3a gezeigte Arretierungsposition des Sperrkolbens 11 entsteht dadurch, dass die Hubstange 21 nicht von dem Magnetfeld des Elektromagneten 22 beeinflusst ist. Erst wenn der Elektromagnet 22 bestromt wird, wird die Hubstange 21 in Richtung des Elektromagneten 22 gezogen und die Kugeln 32 rollen von dem dritten Abschnitt 27 über den zweiten kegelstumpfförmigen Abschnitt 26 auf den ersten Abschnitt 25 der Hubstange 21 ab, so dass der Sperrkolben 11 freigegeben ist.

In den Zeichnungen ist angegeben, dass der Abstand ΔS₁ zwischen der Außenkontur der Hubstange und der Hülse kleiner bemessen ist als der Abstand ΔS₂ zwischen der Hülse und der Innenwand des Sperrkolbens 11.

Des Weiteren ist in den Figuren 3a bis 3d ein Hebelgestänge 30 vorgesehen, das als Wippe ausgebildet ist und die Linearbewegungen des Sperrkolbens 11 in Drehbewegungen umwandelt. Das Hebelgestänge 30 wirkt demnach als Zwischenglied zur Arretierung oder Freigabe des Zahnrades.

## Patentansprüche

1. Verriegelungs-Vorrichiung (1) zur Fixierung und Freigabe eines Bauteiles (2), insbesondere eines Zahnrades (2) in einem Automatik-Getriebe (3),
- mit einem Sperrkolben (11) der unmittelbar oder über Zwischenglieder (30) mit dem Bauteil (2) in trieblicher Wirkverbindung steht bzw. von diesem entkoppelt ist,
- mit einem Gehäuse (6), in dem der Sperrkolben (11) axial verschiebbar gelagert ist und in dem ein Druckraum (7) mit einer Einlassöffnung (8) für ein Medium, vorzugsweise Hydraulikflüssigkeit, vorgesehen ist, in dem der Sperrkolben (11) eingesetzt und durch das Medium mit einer Kraft beaufschlagt ist,
- mit einer in dem Gehäuse (6) axial verschiebbaren Hubstange (21), die fluchtend und beabstandet zu dem Sperrkolben (11) angeordnet ist und die elektromagnetisch gehalten und/oder mittels eines Elektromagneten (22) hin und her bewegbar ist,
- und mit mindestens einer Sperreinrichtung (31), die durch die Bewegung der Hubstange (21) aktivierbar ist und auf den Sperrkolben (11) zu dessen Arretierung einwirkt,
**dadurch gekennzeichnet,**
- **dass** die Sperreinrichtung (31) als Kugel- oder Wälzkörper (32) ausgebildet ist, die jeweils auf der Außenseite der Hubstange (21) anliegt,
- **dass** in den Sperrkolben (11) eine Aufnahmetasche (14) eingearbeitet ist, in die die Hubstange (21) teilweise und die jeweilige Kugel (32) vollständig angeordnet sind,
- **dass** die jeweilige Kugel (32) der Sperreinrichtung (31) zwischen der Innenwand (15) der Aufnahmetasche (14) und der Hubstange (21) relativ zu dieser bewegbar ist,
- **dass** die jeweilige Kugel (32) mittels einer an der Hubstange (21) angeformten sich in Richtung des Sperrkolbens (11) verbreiternde Kegelfläche (26) in Richtung der Innenwand (15) der Aufnahmetasche (14) anhebbar ist,
- und **dass** an der Innenwand (15) der Aufnahmetasche (14) eine sich in Richtung der Hubstange (32) verjüngende Anlagefläche (18) angearbeitet ist, an die die jeweilige Kugel (32) der Sperreinrichtung (31) zur formschlüssigen Fixierung des Sperrkolbens (11) anliegt.

2. Vorrichtung nach Anspruch 1,
**dadurch gekennzeichnet,**
**dass** der Sperreinrichtung (31) eine Hülse (33) zugeordnet ist, dass in die Hülse (33) mindestens eine Durchgangsbohrung (34) eingearbeitet ist, dass in jede Durchgangsbohrung (34) eine der Kugeln (32) drehbar eingesetzt ist und dass die Kugeln (32) durch die Wand der Durchgangsbohrung (34) seitlich geführt gehalten sind.

3. Vorrichtung nach Anspruch 2,
**dadurch gekennzeichnet,**
**dass** mindestens zwei Durchgangsbohrungen (34) zur Aufnahme der jeweiligen Kugeln (32) vorgesehen sind, die paarweise diametral gegenüberliegend oder bei einer ungeraden Anzahl von Durchgangsbohrungen (34) in einem Winkel von 360° geteilt durch die Anzahl der Kugeln (32) angeordnet sind.

4. Vorrichtung nach Anspruch 2,
**dadurch gekennzeichnet,**
**dass** die Hülse (33) mit dem Gehäuse (6) oder dem Elektromagneten (22) ortsfest verbunden ist und dass die Hubstange (21) in der Hülse (33) axial beweglich geführt ist.

5. Vorrichtung nach einem der vorgenannten Ansprüche,
**dadurch gekennzeichnet,**
**dass** die Aufnahmetasche (14) rotationssymmetrisch ausgebildet ist und dass der dem Sperrkolben (11) benachbarte Durchmesser (16) der Aufnahmetasche (14) größer bemessen ist als der Durchmesser (17) der der Hubstange (21) zugewandt ist.

6. Vorrichtung nach einem der vorgenannten Ansprüche,
**dadurch gekennzeichnet,**
**dass** die Hubstange (21) aus drei Abschnitten (25, 26, 27) gebildet ist, dass der erste dem Elektromagneten (22) benachbarte Abschnitt (25) einen geringeren Durchmesser als der dritte dem Sperrkolben (11) bzw. der Aufnahmetasche (14) des Sperrkolbens (11) zugewandte Abschnitt (27) aufweist und dass der zweite Abschnitt (26) als Kegelstumpf ausgestaltet ist, durch den der erste und dritte Abschnitt (25, 27) der Hubstange (21) miteinander verbunden sind.

7. Vorrichtung nach Anspruch 6,
**dadurch gekennzeichnet,**
**dass** die Steigung des zweiten Abschnitts (26) in einem Winkel von 20° bis 50°, vorzugsweise von 45°, verläuft.

8. Vorrichtung nach Anspruch 5 oder 6,
**dadurch gekennzeichnet,**
**dass** das Durchmesserverhältnis der Aufnahmetasche (11) gleich groß bemessen ist zu dem Durchmesserverhältnis des ersten und dritten Abschnittes (25, 27) der Hubstange (21) und dass die Steigung der Kegelfläche (26) der Hubstange (21) mit der Steigung zwischen dem ersten und zweiten Bereich (16,17) der Aufnahmetasche (14) übereinstimmt.

9. Vorrichtung nach einem der vorgenannten Ansprüche,
**dadurch gekennzeichnet,**
**dass** die Tiefe der Aufnahmetasche (14) dem Verstellweg des Sperrkolbens (11) entspricht oder etwas größer als der Verstellweg des Sperrkolbens (11) bemessen ist.

10. Vorrichtung nach einem der vorgenannten Ansprüche,
**dadurch gekennzeichnet,**
**dass** der Verstellweg der Hubstange (21) etwas größer bemessen ist als die Länge des zweiten kegelstumpfförmigen Abschnittes (26) der Hubstange(21), und dass die Kugeln (32) der Sperreinrichtung (31) im Arretierungszustand des Sperrkolbens (11) an dem dritten Abschnitt (27) der Hubstange (21) anliegen.

11. Vorrichtung nach einem der vorgenannten Ansprüche,
**dadurch gekennzeichnet,**
**dass** die axialen Verschiebebewegungen der Hubstange (21) durch den Elektromagneten (22) derart beeinflusst sind, dass diese unabhängig von dem Druckzustand in dem Druckraum (7) des Gehäuses einstellbar sind.
